(19) Europäisches Patentamt
European Patent Office
Office européen des brevets

(11) Publication number: 0 520 746 B1

# (12) EUROPEAN PATENT SPECIFICATION

(45) Date of publication of patent specification: 15.11.95

(51) Int. Cl.6: C09C 1/64, C08K 9/06, C08L 83/04

(21) Application number: 92305762.4

(22) Date of filing: 23.06.92

The file contains technical information submitted after the application was filed and not included in this specification

## (54) Surface-treated alumina and thermally conductive silicone composition containing the same.

(30) Priority: 24.06.91 JP 178667/91

(43) Date of publication of application:
30.12.92 Bulletin 92/53

(45) Publication of the grant of the patent:
15.11.95 Bulletin 95/46

(84) Designated Contracting States:
DE FR GB

(56) References cited:
DE-A- 4 034 976
US-A- 4 213 886

DATABASE WPIL Derwent Publications Ltd., London, GB; AN 90-110367

DATABASE WPIL Derwent Publications Ltd., London, GB; AN 89-134195

(73) Proprietor: SHIN-ETSU CHEMICAL CO., LTD.
6-1, Ohtemachi 2-chome
Chiyoda-ku
Tokyo (JP)

(72) Inventor: Ikeno, Masayuki
117, Yanase
Annaka-shi,
Gunma-ken (JP)

(74) Representative: Votier, Sidney David et al
CARPMAELS & RANSFORD
43, Bloomsbury Square
London WC1A 2RA (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### 1. Field of the Invention

The present invention relates to a surface-treated alumina suitable as an additive for addition curing type silicone compositions and to an addition curing type thermally conductive silicone composition containing said alumina.

#### 2. Description of the Prior Art

Hitherto, in the silicone industry, in order to prevent a silica filler and a silicone polymer from reacting to result in the lowering of properties and workability of the mixture of them, i.e., in order to prevent the occurrence of the so-called structuring or creep aging, many techniques of previously surface-treating silica fillers are suggested such as a method using cyclotrisiloxane and ammonia (Japanese Patent Publication (kokoku) No. 45-12567) and a method wherein a silica powder is bought in contact with ammonia and then with a silylated nitrogen compound (Japanese Patent Publication (kokoku) No. 49-20739). On the other hand, although the alumina filler is known as a filler for improving thermal conductivity of an obtainable cured product, since the surface of the alumina filler is relatively inert, there have been no reports on surface treatment of the alumina filler.

However, a detailed study of the case wherein an alumina is loaded into an addition curing type silicone composition that is a general type of curable silicone composition has found that the Al-OH present on the surface of alumina reacts with the hydrogen atom bonded to the silicon atom to bring about a dehydrogenation reaction, which is not found in the case of silica fillers. In particular, it has been found that, in a curable silicone composition, when the curable silicone composition is cured, since a silicone gel very low in crosslinking density is formed, the crosslinking density that will be resulted from the curing is liable to be influenced considerably by that reaction during the long-term storage and therefore the storage stability is low.

### SUMMARY OF THE INVENTION

Therefore, an object of the present invention is to provide a surface-treated alumina which is inhibited from reacting with the hydrogen atom bonded to a silicon atom and an addition curing type thermally conductive silicone composition high in storage stability wherein said alumina is used.

That is, according to the present invention there is provided a surface-treated alumina, comprising an alumina which has been treated with a silyl ketene acetal represented by the formula (I):

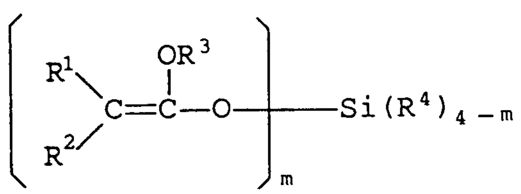

(I)

wherein $R^1$ and $R^2$, which may be the same or different, each represent a group selected from the group consisting of a hydrogen atom and a monovalent hydrocarbon group, $R^3$ group(s), which may be the same or different where there exist two or more $R^3$'s, each represent a monovalent hydrocarbon group or a group represented by the formula (II):

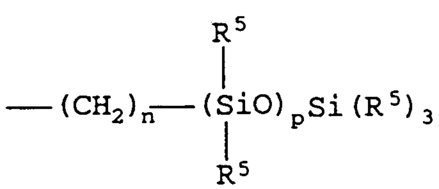

(II)

in which $R^5$ groups, which may be the same or different, each represent a hydrogen atom or a monovalent hydrocarbon group, n is an integer of 0 to 6, and p is an integer of 0 to 10, or by the formula (III):

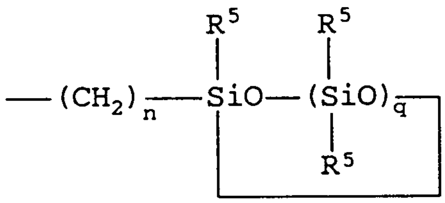

(III)

in which n has the same meaning as defined above and q is an integer of 2 to 10, $R^4$ group(s), which may be the same or different where there exist two or more $R^4$'s, each represent a hydrogen atom, a monovalent hydrocarbon group, or a group represented by the formula (IV):

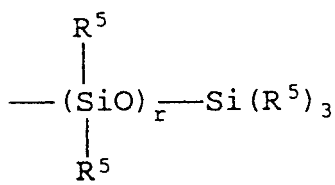

(IV)

in which $R^5$ has the same meaning as defined above and r is an integer of 0 to 10, and m is an integer of 1 to 4.

Since the present surface-treated alumina is inhibited from reacting with the hydrogen atom bonded to the silicon atom in a silicone polymer, the addition curing type thermally conductive silicone composition wherein that alumina is used is high in storage stability.

## DETAILED DESCRIPTION OF PREFERRED EMBODIMENTS

### Aluminas

As the alumina to be used in the present invention for imparting thermal conductivity, any spherical or nonspherical alumina having an average particle diameter of 50 µm or less can be used.

### Silyl ketene acetals

The silyl ketene acetals represented by the general formula (I) to be used in the present invention are disclosed by Ernest W. Colvin in "Silicon Reagents in Organic Synthesis", Academic Press (1988). Among the ketene acetals represented by the general formula (I), preferable silyl ketene acetals are selected from those wherein $R^1$ and $R^2$ are selected from the group consisting of hydrogen, methyl, ethyl, and propyl; $R^3$ is selected from the group consisting of methyl, ethyl, propyl, $-Si(Me)_3$, $-(CH_2)_3-SiMe_3$, and $-(CH_2)_3-SiMe_2-O-SiMe_3$; and $R^4$ is selected from the group consisting of methyl and $-OSiMe_3$. Me herein means the methyl group.

Specific examples of the silyl ketene acetals represented by the general formula (I) are the following compounds:

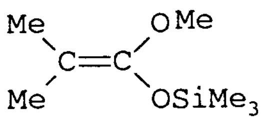 , 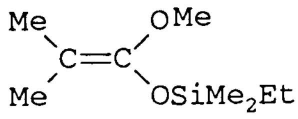 ,

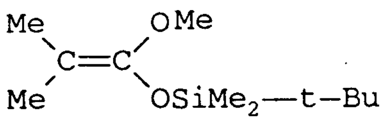 , 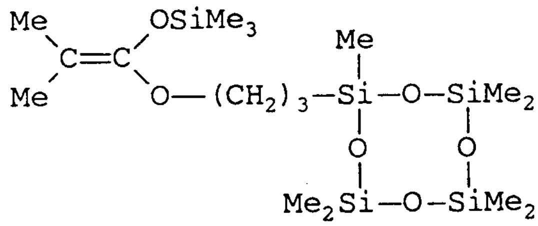 ,

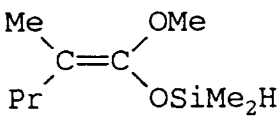 , 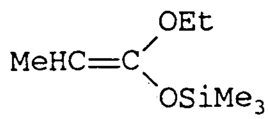 ,

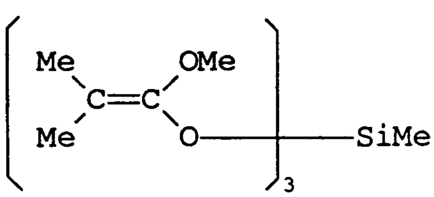 , 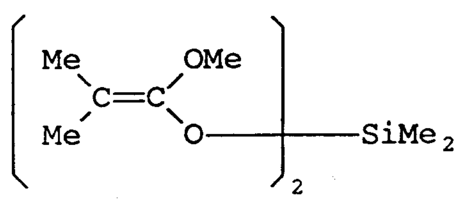 ,

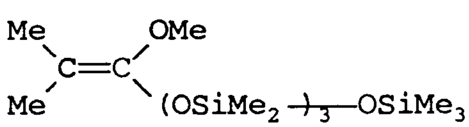 , 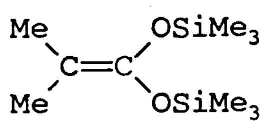 , and

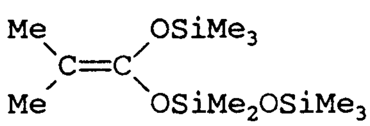 .

Herein, Me represents the methyl group, Et represents the ethyl group, Pr represents the propyl group, and t-Bu represents the tertiary butyl group.

Surface treatment

The surface treatment of an alumina with a silyl ketene acetal may be carried out in a separate step before the mixing of the alumina with the liquid organopolysiloxane which is the major component of the addition curing type silicone composition, or in the step during the mixing of the alumina with the liquid organopolysiloxane, or in the step after the mixing of the alumina with the liquid organopolysiloxane.

For instance, the alumina is treated in such a way that it is dispersed in a solvent inert to the silyl ketene acetal such as toluene and then the required amount of the silyl ketene acetal is added. The resulting mixture is generally stirred at a temperature of 25 to 100 °C for 1 to 8 hours and is filtered to remove the solvent. The obtained filter cake contains the treated alumina, excess silyl ketene acetal, and by-products produced by reactions on the surface of the alumina with the silyl ketene acetal. By washing with toluene or drying at a temperature of 100 °C or over the excess silyl ketene acetal and the by-products can be removed from the treated alumina.

During the step of mixing the alumina with the liquid organopolysiloxane, the silyl ketene acetal may be added to form the surface-treated alumina in situ. In this case, for example, the organopolysiloxane is added

into a suitable mixer and the silyl ketene acetal is dispersed. Then, the alumina is added and they are mixed generally at a temperature of 25 to 100°C for 1 to 8 hours to complete the reaction of the alumina with the silyl ketene acetal. Thereafter excess silyl ketene acetal and by-products are removed by reducing the pressure in the mixer.

Alternatively, the silyl ketene acetal may be added to a mixture of the organopolysiloxane and the alumina to form the intended surface-treated alumina. The mixture of the organopolysiloxane and the alumina is added into a suitable mixer and the silyl ketene acetal is dispersed into the mixture. Then, they are mixed generally at a temperature of 25 to 100°C for 1 to 8 hours to complete the reaction between the alumina and the silyl ketene acetal. Thereafter, excess silyl ketene acetal and by-products are removed by reducing the pressure in the mixer.

In any of the cases, a preferable amount of the silyl ketene acetal is 0.1 to 10 parts by weight for 100 parts by weight.of the alumina.

Thermally conductive curable silicone compositions

The present invention also relates to a thermally conductive addition type curable silicone composition to which the above surface-treated alumina has been added.

That is, according to the present invention, there is provided a thermally conductive silicone composition that contains an addition curing type silicone composition and the above surface-treated alumina.

The surface-treated alumina is desirably blended in an amount of 50 to 600 parts by weight per 100 parts by weight of the addition curing type silicone composition.

Although, generally, curable silicone compositions include addition reaction type materials, condensation type materials, and materials of radical curing type by organic peroxides, the present surface-treated alumina is particularly effective in addition curing type silicone compositions. The obtainable cured product may be in any form of gel, elastomer, or resin depending on the purpose. For example, the addition curing type silicone composition typically comprises:

(A) a diorganopolysiloxane containing at least 0.05 mol % of alkenyl groups in the molecule and having a viscosity of 100 to 100,000 cP at 25°C in an amount of 100 parts by weight,

(B) an organohydrogenpolysiloxane having at least two hydrogen atoms directly bonded to silicon atoms in the molecule in such an amount that the molar ratio of the hydrogen atoms directly bonded to the silicon atoms in the component (B) to the alkenyl groups of the component (A) is from 0.4 to 4.0, and

(C) a platinum compound or a platinum group metal compound in a catalytic amount.

The alkenyl group-containing organopolysiloxane (A) has a viscosity of 100 to 100,000 cP at 25°C and is, for example, represented by the following general formula:

$$R_aSiO_{(4-a)/2}$$

wherein R's, which may be the same or different, each represent a group selected from the group consisting of a saturated hydrocarbon group such as methyl, ethyl, and propyl, an unsaturated hydrocarbon group such as vinyl, propenyl, and butenyl, an aryl group such as phenyl and xylyl, and a halogenated hydrocarbon group such as 3,3,3-trifluoropropyl, provided that it is required that the molecule contains 0.05 mol % or more of unsaturated hydrocarbon groups on average, and a is in the range of 1.9 to 2.4. This organopolysiloxane may be a straight-chain organopolysiloxane or a branched organopolysiloxane containing a $RSiO_{3/2}$ unit(s) or $SiO_{4/2}$ unit(s). Basically, the substituent on the silicon atom may be any one of the above mentioned groups, but preferably the unsaturated group is a vinyl group, other substituent is a methyl group, and if solvent resistance is required, a trifluoropropyl group is desirable. The organopolysiloxane is produced by processes known to those skilled in the art. For instance, the organopolysiloxane can be obtained by the equilibration reaction of an organocyclopolysiloxane and $R_3SiOSiR_3$ wherein R have the same meaning as defined above in the presence of an alkali or acid catalyst.

The organohydrogenpolysiloxane (B) reacts with the component (A) and acts as a crosslinking agent, there is no particular restriction on the molecular structure thereof, and although any of the conventionally produced organohydrogenpolysiloxanes having, for example, a linear, cyclic, or branched structure can be used, it is required that the organohydrogenpolysiloxane has hydrogen atoms directly bonded to at least two silicon atoms in the molecule. The substituents of this compound bonded to silicon atoms other than the hydrogen include the same substituents in the organopolysiloxane which is the component (A). The amount of the component (B) to be added is such that the molar ratio of the silicon-bonded hydrogen atoms in the component (B) to the alkenyl groups in the component (A) is in the range of from 0.4 to 4.0, preferably from 0.8 to 2.0. If the molar ratio is smaller than 0.4, the crosslinking density becomes too low

and the heat resistance of the cured silicone rubber is adversely affected. On the other hand, if the molar ratio is larger than 4.0, a problem arises that foaming occurs due to the dehydrogenation reaction or a fear arises for an adverse effect on the heat resistance. The organohydrogenpolysiloxane can be obtained by processes known to those skilled in the art. A quite general process for the preparation comprises, for example, carrying out the equilibration reaction of octamethylcyclotetrasiloxane and(or tetramethylcyclotetrasiloxane and a siloxane compound containing a $(CH_3)_3SiO_{1/2}$ unit or an $H(CH_3)_2SiO_{1/2}$ unit that can constitute a terminal group in the presence of a catalyst such as sulfuric acid, trifluoromethanesulfonic acid, and methanesulfonic acid at a temperature of about -10 to +40 °C, which can yield the intended organohydrogenpolysiloxane readily.

The platinum or the platinum group metal compound that is the component (C) is a compound used as a catalyst for promoting the addition reaction (hydrosilylation) between the component (A) and the component (B) mentioned above and use can be made of compounds known to those skilled in the art. Examples include platinum black, chloroplatinic acid, an alcohol-modified chloroplatinic acid, and a complex of chloroplatinic acid, for example, with an olefin, an aldehyde, a vinylsiloxane, or an acetylene alcohol. The amount of the component (C) to be added may be varied in accordance the desired curing rate and is generally in the range of 0.1 to 1,000 ppm, preferably 1 to 200 ppm, in terms of the metal based on the component (A).

If the curing time is to be controlled so as to make these materials practically used, a compound selected from the group consisting of a vinyl group-containing organopolysiloxane such as vinylcyclotetrasiloxane, triallyl isocyanurate, an alkyl maleate, and an acetylene alcohol, a corresponding silane- or siloxane-modified product, a hydroperoxide, tetramethylethylenediamine, and benzotriazole, or a mixture of these may be used.

As a means of improving the mechanical strength without increasing the viscosity of the composition as a product, in combination with the component (A), a silicon resin soluble in a silicone oil that is made up basically of $SiO_2$ and $R_3SiO_{1/2}$ units and contains at least one alkenyl group in the molecule may be used.

Further, a reinforcing filler such as fumed silica and precipitated silica having a specific surface area of 50 $m^2/g$ or over; a non-reinforcing filler such as quartz powder, diatomaceous earth, and calcium carbonate; an inorganic pigment such as cobalt blue, and a colorant such as organic dyes; a heat resistant improver, and a flame retardant improver such as cerium oxide, zinc carbonate, manganese carbonate, blood red, titanium oxide, and carbon black may be added unless they do not impair the purpose of the present invention.

## EXAMPLES

Now, the present invention will be described specifically with reference to Examples, wherein "parts" represent parts by weight and Me and Vi denote a methyl group and a vinyl group respectively.

### Example 1

100 parts of a vinyl group-containing organopolysiloxane substantially consisting of 99.1 mol % of $Me_2SiO$ units, 0.51 mol % of $Me_2SiO_{0.5}$ units, and 0.39 mol % of $ViMe_2Si_{0.5}$ units and having a viscosity of 800 cP at 25 °C and 350 parts of a spherical alumina having an average particle diameter of 10 μm are charged into a planetary motion type stirring machine and were mixed for 60 min to obtain a fluid mixture. To 450 g of this fluid mixture, 5 g of a treatment represented by the formula:

$$Me_2C=C(OMe)OSiMe_3$$

was added, and the resulting mixture was reacted at 80 °C for 2 hours with stirring. Thereafter, excess treatment and by-products, i.e., esters were removed by stirring the mixture at 150 °C for 1 hour under a reduced pressure of 30 mmHg, thereby obtaining a silicone base composition containing the surface-treated alumina. To 450 parts of this composition, were added 0.1 part of a chloroplatinic acid/vinyl siloxane complex (the platinum content: 1 % by weight), 0.1 part of 1-ethynyl-1-hexanol, and 1.0 part of a methylhydrogenpolysiloxane wherein the content of the hydrogen atoms bonded to silicon atoms is about 0.5 % by weight and the terminal is blocked with an $HMe_2SiO_{0.5}$ unit, and they were mixed uniformly to obtain a curable composition.

The thus obtained curable composition was cured by heating at 150 °C for 60 min to obtain a gellike cured product. The rate of the penetration of the needle of the gellike cured product was measured in accordance with ASTM D-1403. Also, the obtained composition was stored at room temperature for 3

months after the preparation of the composition and was then cured under the same conditions as above and the rate of the penetration of the needle of the cured product was measured similarly. The results are shown in Table 1.

Example 2

71 parts of a vinyl group-containing organopolysiloxane having a viscosity of 1,500 cP at 25°C and substantially consisting of 94.24 mol % of $Me_2SiO$ units, 3 mol % of $MeSiO_{1.5}$ units, 2.24 mol % of $Me_3SiO_{0.5}$ units, and 0.52 mol % of $ViMePhSiO_{0.5}$ units, 29 parts of an organopolysiloxane having a viscosity of 500 cP at 25°C and substantially consisting of 94 mol % of $Me_2SiO$ units, 3 mol % of $MeSiO_{1.5}$ units, and 3 mol % of $Me_3SiO_{0.5}$ units, and 350 parts of a spherical alumina having an average diameter of 10 µm were charged into a planetary motion type stirring machine and were mixed for 60 min, thereby obtaining a fluid mixture. To 450 g of this fluid mixture, 5 g of a treatment represented by the formula:

$Me_2C=C(OMe)OSiMe_2OSiMe_3$

was added and they were reacted at 80°C for 2 hours with stirring. Thereafter, excess treatment and esters, i.e., by-products were removed by stirring at 150°C for 1 hour under a reduced pressure of 30 mmHg, thereby obtaining a silicone base composition containing the surface-treated alumina. 0.1 part of a chloroplatinic acid/vinyl siloxane complex (the platinum content: 1 % by weight), 0.06 part of 1-ethynyl-1-hexanol, 0.0012 part of tetramethylethylenediamine, and 4.3 parts of a dimethylpolysiloxane having a viscosity of 18 cP at 25°C wherein the terminal is blocked with an $HMe_2SiO_{0.5}$ unit was brought in contact with each other for 12 hours at room temperature and then the resulting mixture was added to 450 parts of the above silicon base composition, followed by uniform mixing, thereby obtaining a composition. To this composition, was added 6.7 parts of a methylhydrogenpolysiloxane having a viscosity of 35 cP at 25°C and consisting of 2.5 mol % of $HMe_2SiO_{0.5}$ units, 2.5 mol % of $Me_3SiO_{0.5}$ units, and 94 mol % of $Me_2SiO$ units, followed by uniform mixing, thereby obtaining a curable composition.

The thus obtained curable composition was cured by heating at 150°C for 60 min, thereby obtaining a gellike cured product. The rate of the penetration of the needle of the gellike cured product was measured in accordance with ASTM D-1403. Also, the obtained composition was stored at room temperature for 3 months after the preparation of the composition and was then cured under the same conditions as above and the rate of the penetration of the needle of the cured product was measured similarly. The results are shown in Table 1.

Comparative Example 1

Example 1 was repeated, except that the treatment was not used, thereby obtaining a curable composition. The thus obtained composition was cured immediately after the preparation and after 3 months after the preparation similarly to Example 1 and the rate of the penetration of the needle of the obtained cured products was measured. The results are shown in Table 1.

Comparative Example 2

Example 2 was repeated, except that the treatment was not used, thereby preparing a curable composition. The thus obtained composition was cured immediately after the preparation and after 3 months after the preparation similarly to Example 1 and the rate of the penetration of the needle of the obtained cured products was measured. The results are shown in Table 1.

Table 1

| | Example 1 | Example 2 | Comparative Example 1 | Comparative Example 2 |
|---|---|---|---|---|
| Penetration in the initial stage | 42 | 60 | 45 | 63 |
| Penetration after 3 months | 42 | 60 | 70 | 84 |

## Claims

1. A surface-treated alumina, comprising an alumina which has been treated with a silyl ketene acetal represented by the formula (I):

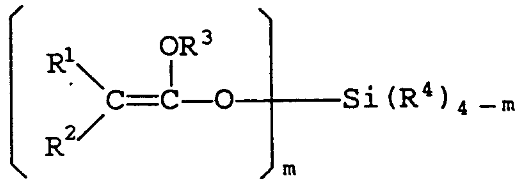

(I)

wherein $R^1$ and $R^2$, which may be the same or different, each represent a group selected from the group consisting of a hydrogen atom and a monovalent hydrocarbon group, $R^3$ group(s), which may be the same or different where there exist two or more $R^3$'s, each represent a monovalent hydrocarbon group or a group represented by the formula (II):

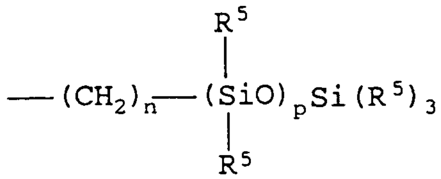

(II)

in which $R^5$ groups, which may be the same or different, each represent a hydrogen atom or a monovalent hydrocarbon group, n is an integer of 0 to 6, and p is an integer of 0 to 10, or by the formula (III):

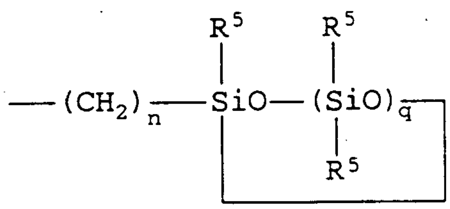

(III)

in which n has the same meaning as defined above and q is an integer of 2 to 10, $R^4$ group(s), which may be the same or different where there exist two or more $R^4$'s, each represent a hydrogen atom, a monovalent hydrocarbon group, or a group represented by the formula (IV):

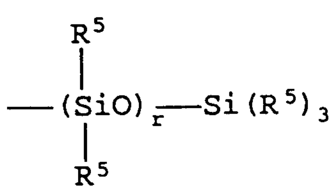

(IV)

in which $R^5$ has the same meaning as defined above and r is an integer of 0 to 10, and m is an integer of 1 to 4.

2. A surface-treated alumina as claimed in claim 1, wherein said silyl ketene acetal is represented by the general formula (I) wherein $R^1$ and $R^2$ each are selected from the group consisting of hydrogen, methyl, ethyl, and propyl; $R^3$ is selected from the group consisting of methyl, ethyl, propyl, $-Si(Me)_3$, $-(CH_2)_3-SiMe_3$, and $-(CH_2)_3-SiMe_2-O-SiMe_3$; and $R^4$ is selected from the group consisting of methyl and $-OSiMe_3$.

3. A surface-treated alumina as claimed in claim 1, wherein said silyl ketene acetal comprises at least one compounds selected from the group consisting of

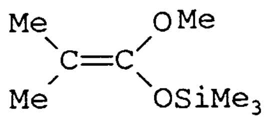 , 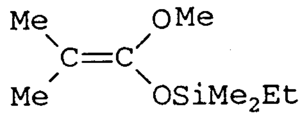 ,

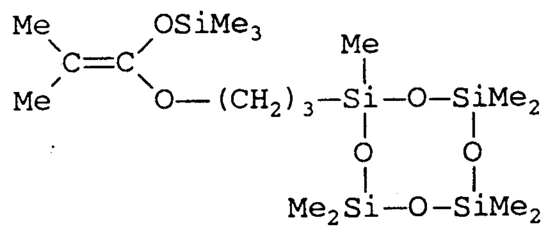 , 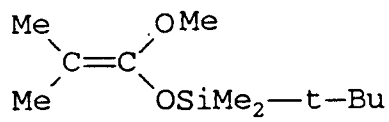 ,

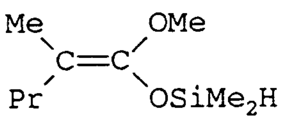 , 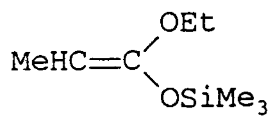 ,

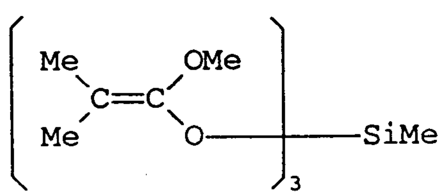 , 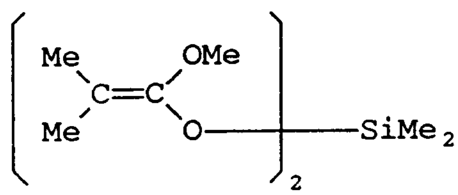 ,

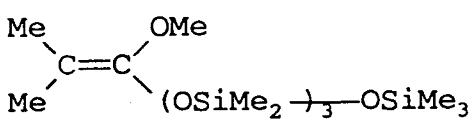 , 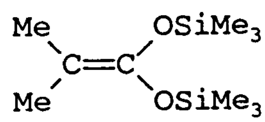 , and

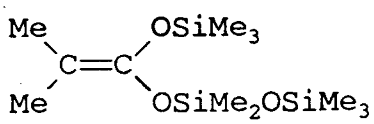 .

4. A surface-treated alumina as claimed in claim 1, wherein the alumina before the treatment has a particle diameter of 50 $\mu$m or below.

5. A thermally conductive silicone composition containing an addition curable type silicone composition and a surface-treated alumina as claimed in claim 1.

6. A thermally conductive silicone composition as claimed in claim 5, wherein said addition curing type silicone composition comprises:
(A) a diorganopolysiloxane containing at least 0.05 mol % of alkenyl groups in the molecule and having a viscosity of 100 to 100,000 cP at 25 °C in an amount of 100 parts by weight,
(B) an organohydrogenpolysiloxane having at least two hydrogen atoms directly bonded to silicon atoms in the molecule in such an amount that the molar ratio of the hydrogen atoms directly bonded to the silicon atoms in the component (B) to the alkenyl groups of the component (A) is from 0.4 to 4.0, and
(C) a platinum compound or a platinum group metal compound in a catalytic amount.

7. A cured product obtained by curing a composition as claimed in claim 5.

**Patentansprüche**

1. Oberflächenbehandeltes Aluminiumoxid, welches ein Aluminiumoxid aufweist, das behandelt wurde mit einem Silylketenacetal der Formel (I):

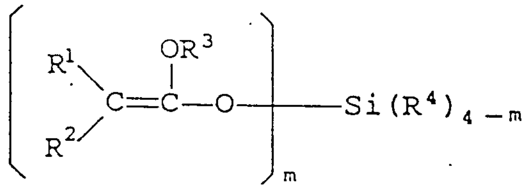

(I)

worin $R^1$ und $R^2$, die gleich oder verschieden sein können, jeweils eine Gruppe bestehend aus einem Wasserstoffatom und einer monovalenten Kohlenwasserstoffgruppe darstellen, die $R^3$-Gruppe oder -Gruppen, die gleich oder verschieden sein können, wenn zwei oder mehrere $R^3$-Gruppen vorliegen, jeweils eine monovalente Kohlenwasserstoffgruppe sind oder eine Gruppe der Formel (II):

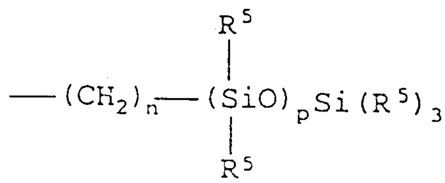

(II)

worin die $R^5$-Gruppen, die gleich oder verschieden sein können, jeweils ein Wasserstoffatom oder eine monovalente Kohlenwasserstoffgruppe bedeuten, n eine ganze Zahl von 0 bis 6 ist und p eine ganze Zahl von 0 bis 10 ist,
oder die der Formel (III) entsprechen

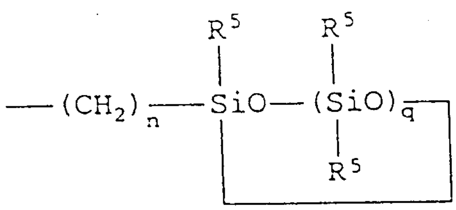

(III)

worin n die gleiche Bedeutung hat wie oben angegeben und q eine ganze Zahl von 2 bis 10 ist,
die $R^4$-Gruppe oder -Gruppen, die gleich oder verschieden sein können, wenn zwei oder mehr $R^4$-Gruppen vorliegen, jeweils ein Wasserstoffatom, eine monovalente Kohlenwasserstoffgruppe oder eine Gruppe der Formel (IV) darstellen:

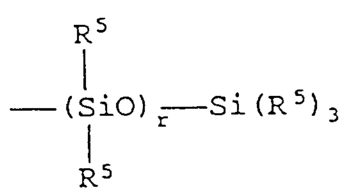

(IV)

worin $R^5$ die gleiche Bedeutung hat wie oben angegeben und r eine ganze Zahl von 0 bis 10 ist und m eine ganze Zahl von 1 bis 4 ist.

2. Oberflächenbehandeltes Aluminiumoxid nach Anspruch 1, worin das Silylketenacetal der allgemeinen Formel (I) entspricht, worin $R^1$ und $R^2$ jeweils ausgewählt sind aus der Gruppe bestehend aus Wasserstoff, Methyl, Ethyl und Propyl; $R^3$ ausgewählt ist aus der Gruppe bestehend aus Methyl, Ethyl,

Propyl, -Si(Me)3, $-(CH_2)_3-SiMe_3$, und $-(CH_2)_3-SiMe_2-O-SiMe_3$; und $R^4$ ausgewählt ist aus der Gruppe bestehend aus Methyl und - $OSiMe_3$.

**3.** Oberflächenbehandeltes Aluminiumoxid nach Anspruch 1, worin das Silylketenacetal mindestens eine Verbindung umfaßt, die ausgewählt ist aus der Gruppe bestehend aus

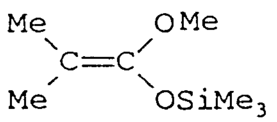 ,

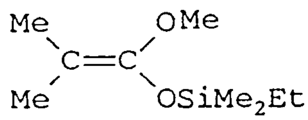 ,

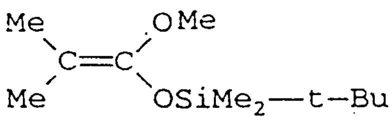 ,

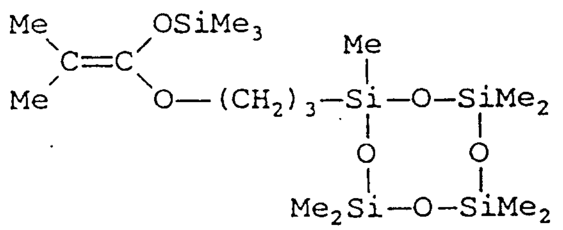 ,

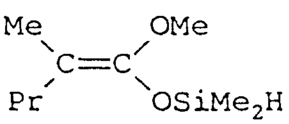 ,

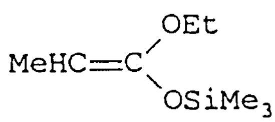 ,

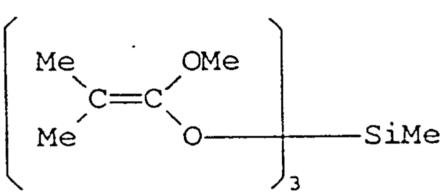 ,

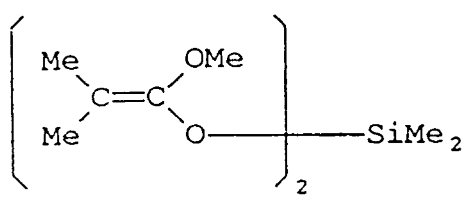 ,

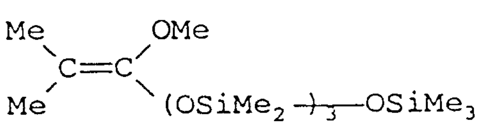 ,

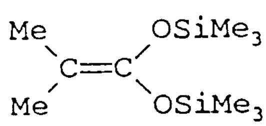 , and

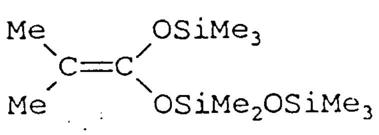 .

**4.** Oberflächenbehandeltes Aluminiumoxid nach Anspruch 1, worin das Aluminiumoxid vor der Behandlung einen Teilchendurchmesser von 50 µm oder darunter aufweist.

**5.** Thermisch leitfähige Silikonzusammensetzung, die eine Silikonzusammensetzung vom additionshärtbaren Typ und ein oberflächenbehandeltes Aluminiumoxid gemäß Anspruch 1 enthält.

**6.** Thermisch leitfähige Silikonzusammensetzung nach Anspruch 5, worin die Silikonzusammensetzung vom additionshärtenden Typ aufweist:

(A) ein Diorganopolysiloxan, das mindestens 0,5 Mol.-% Alkenylgruppen im Molekül enthält und eine Viskosität von 100 bis 100.000 cP bei 25 °C hat, in einer Menge von 100 Gew.-Teilen,

(B) ein Organohydrogenpolysiloxan, das mindestens zwei Wasserstoffatome direkt gebunden an Siliciumatome im Molekül hat, in einer solchen Menge, daß das molare Verhältnis der direkt an die Siliciumatome gebundenen Wasserstoffatome in der Komponente (B) zu den Alkenylgruppen der Komponente (A) von 0,4 bis 4,0 trägt und

(C) eine Platinverbindung oder eine Platingruppenmetallverbindung in einer katalytischen Menge.

**7.** Gehärtetes Produkt, erhalten durch Härten einer Zusammensetzung gemäß Anspruch 5.

## Revendications

**1.** Une alumine traitée en surface comprenant une alumine qui a été traitée avec un acétal de silylcétène représenté par la formule (I) :

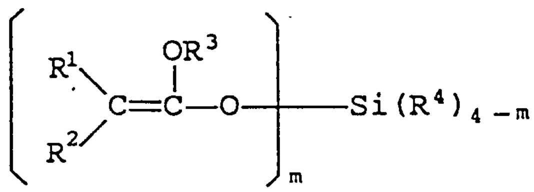

(I)

dans laquelle $R^1$ et $R^2$ qui peuvent être identiques ou différents, représentent chacun un groupe choisi parmi le groupe comprenant un atome d'hydrogène et un groupe hydrocarboné monovalent, $R^3$ représente un groupe ou des groupes qui peuvent être identiques ou différents lorsqu'il y a deux ou plusieurs groupes $R^3$, chacun représentant un groupe hydrocarboné monovalent ou un groupe représenté par la formule (II) :

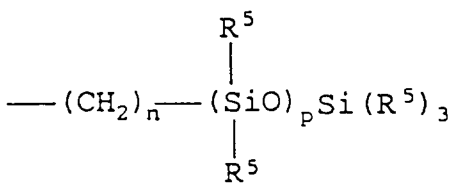

(II)

dans laquelle les groupes $R^5$ qui peuvent être identiques ou différents, représentent chacun un atome d'hydrogène ou un groupe hydrocarboné monovalent, n est un entier de 0 à 6 et p est un entier de 0 à 10, ou par la formule (III) :

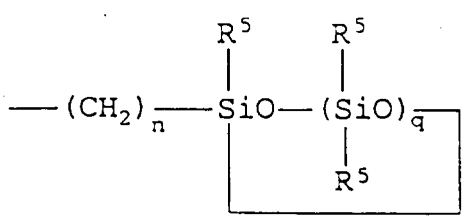

(III)

dans laquelle n a la même signification comme défini ci-dessous et q est un entier de 2 à 10, $R^4$ représente un groupe ou des groupes qui peuvent être identiques ou différents lorsqu'il y a deux ou plusieurs groupes $R^4$, chacun représentant un atome d'hydrogène, un groupe hydrocarboné monovalent ou un groupe représenté par la formule (IV) :

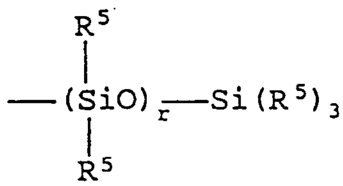 (IV)

dans laquelle $R^5$ a la même signification comme défini ci-dessus et r est un entier de 0 à 10 et m est un entier de 1 à 4.

2. Une alumine traitée en surface selon la revendication 1, dans laquelle ledit acétal de silylcétène est représenté par la formule générale (I), dans laquelle $R^1$ et $R^2$ sont choisis chacun parmi le groupe comprenant l'hydrogène, un radical méthyle, éthyle et propyle, $R^3$ est choisi parmi le groupe comprenant un radical méthyle, éthyle, propyle, $-Si(Me)_3$, $-(CH_2)_3-SiMe_3$, et $-(CH_2)_3-SiMe_2-O-SiMe_3$ ; et $R^4$ est choisi parmi le groupe comprenant un radical méthyle et $-OSiMe_3$.

3. Une alumine traitée en surface selon la revendication 1, dans laquelle ledit acétal de silylcétène comprend au moins un des composés choisis parmi le groupe comprenant :

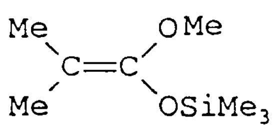 , 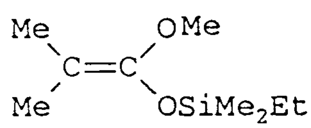 ,

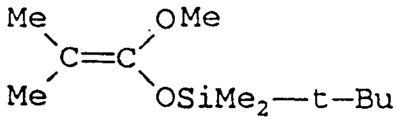 ,

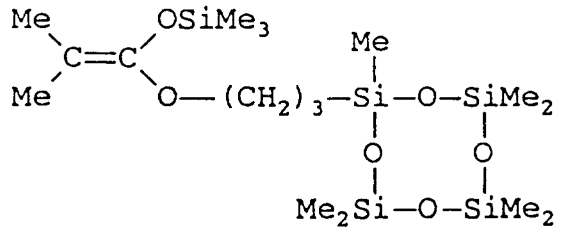 ,

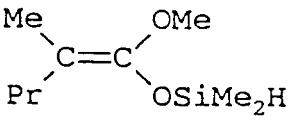 ,

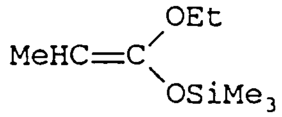 ,

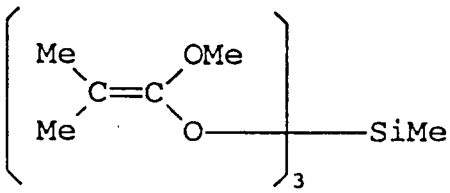 ,

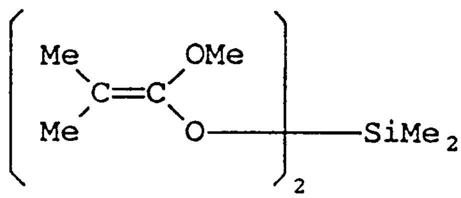 ,

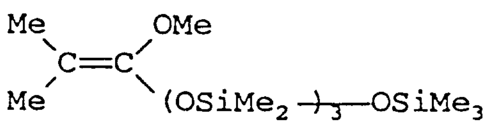 ,

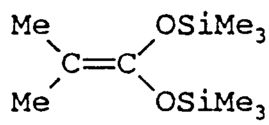 , et

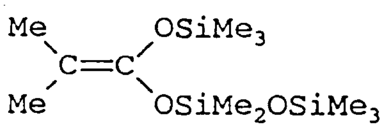 .

4. Une alumine traitée en surface selon la revendication 1, dans laquelle l'alumine avant le traitement a un diamètre de particule de 50µm au moins.

5. Une composition de silicone conductrice thermiquement contenant une composition de silicone de type durcissable par addition et une alumine traitée en surface selon la revendication 1.

6. Une composition de silicone conductrice thermiquement selon la revendication 5, dans laquelle ladite composition de silicone de type durcissable par addition comprend :
(A) un diorganopolysiloxane contenant au moins 0,05 mole % de groupes alcényles dans la molécule et ayant une viscosité de 100 à 100 000 cP à 25 °C selon une quantité de 100 parties en poids,
(B) un organohydrogénopolysiloxane ayant au moins deux atomes d'hydrogène reliés directement aux atomes de silicium dans la molécule selon une quantité telle que le rapport molaire des atomes d'hydrogène reliés directement aux atomes de silicium dans le composé (B) aux groupes alcényles du composé (A) soit de 0,4 à 4,0, et
(C) un composé de platine ou un composé d'un métal du groupe du platine selon une quantité catalytique.

7. Un produit durci obtenu par la prise d'une composition telle que revendiquée dans la revendication 5.